# EUROPÄISCHE PATENTSCHRIFT

(11) **EP 2 861 371 B1**
(45) Veröffentlichungstag und Bekanntmachung des Hinweises auf die Patenterteilung: **14.08.2019**
(21) Anmeldenummer: 13728731.4
(22) Anmeldetag: 12.06.2013
(51) Int. Cl.: B23K 26/03, B23K 26/04, B23K 26/24, B23K 26/32

(54) **VERFAHREN UND VORRICHTUNG ZUM LASER-REMOTE-SCHWEISSEN VON ZWEI BESCHICHTETEN BLECHEN**
METHOD AND DEVICE FOR LASER REMOTE WELDING OF COEATED SHEETS
DISPOSITIF ET MÉTHODE DE SOUDAGE AU LASER À DISTANCE DE TÔLES REVÊTUES

(30) Priorität: 14.06.2012 DE 102012210012
(43) Veröffentlichungstag der Anmeldung: 22.04.2015
(73) Patentinhaber: Bayerische Motoren Werke Aktiengesellschaft, 80809 München (DE)
(72) Erfinder: OEFELE, Florian, 83661 Lenggries (DE); ROOS, Christian, 81541 München (DE)
(86) Internationale Anmeldenummer: PCT/EP2013/062158
(87) Internationale Veröffentlichungsnummer: WO 2013/186262

(56) Entgegenhaltungen:
- WO-A1-03/041902
- DE-A1-102010 005 896
- JP-A- S61 159 292

## Beschreibung

Die Erfindung betrifft ein Verfahren zum Laser-Remote-Schweißen von wenigstens zwei beschichteten Blechen, wobei der Laserstrahl mittels einer Scannereinrichtung auf die miteinander zu verbindenden Bleche gelenkt und darauf geführt wird.

Die Erfindung betrifft ferner auch eine Vorrichtung zur Durchführung des Verfahrens. Ein Verfahren der eingangs genannten Art ist aus der DE 103 09 157 B4 bekannt. Bei dem vorbekannten Verfahren werden die zu fügenden beschichteten Bleche möglichst spaltfrei aufeinander positioniert. Während eines ersten Verfahrensschrittes wird zunächst das dem Laserstrahl zugewandte Blech mittels des Laserstrahls erwärmt, wobei die Beschichtung beider Bleche auf ihren einander zugewandten Seiten verdampft und sich zwischen den Blechen verteilt, ohne dass das Blechgrundmaterial schmilzt. Während eines zweiten Verfahrensschrittes werden die beiden Bleche in dem entschichteten Bereich mittels des Laserstrahls verschweißt und auf diese Weise stoffschlüssig miteinander verbunden.

Zum Stand der Technik wird ergänzend auch auf die JP 11047967 A und die WO 03/041902 A1 hingewiesen.

Der Erfindung liegt die Aufgabe zugrunde, ein Verfahren der eingangs genannten Art anzugeben, dass die mit dem Stand der Technik einhergehenden Nachteile nicht oder zumindest nur in einem verminderten Umfang aufweist.

Diese Aufgabe wird gelöst durch ein erfindungsgemäßes Verfahren mit den Merkmalen des Anspruchs 1. Mit dem nebengeordneten Anspruch 8 erstreckt sich die Lösung der Aufgabe auch auf eine Vorrichtung zur Durchführung des erfindungsgemäßen Verfahrens. Bevorzugte Weiterbildungen und Ausgestaltungen ergeben sich analog für beide Erfindungsgegenstände sowohl aus den abhängigen Ansprüchen als auch aus den nachfolgenden Erläuterungen.

Bei dem erfindungsgemäßen Verfahren werden die beschichteten Bleche durch Erzeugen einer Stirnkehlnaht an einem Überlappstoß miteinander verbunden, wobei die fortlaufende Schweißnahterzeugung durch (wenigstens) eine Kameraeinrichtung erfasst und anhand einer automatischen Auswertung aufgenommener Bilder (bzw. einer aufgenommenen Videosequenz oder dergleichen) die Bahn des Laserstrahls (auf den zu fügenden Blechen) gegebenenfalls korrigiert und an einen Soll-Schweißnahtverlauf angepasst wird, wobei dies insbesondere im laufenden Schweißprozess erfolgt.

Unter einem Laser-Remote-Schweißen wird insbesondere ein Schweißverfahren unter Verwendung der Scanner-Technologie bzw. einer Scannereinrichtung verstanden. Dabei wird der Laserstrahl über wenigstens einen bewegbaren Drehspiegel bzw. Scannerspiegel abgelenkt und auf den zu fügenden Blechen positioniert bzw. geführt, womit sich sehr hohe Bearbeitungsgeschwindigkeiten realisieren lassen. Die Scannereinrichtung kann zudem Linsensysteme zur Fokussierung des Laserstrahls aufweisen. Das Verschweißen erfolgt typischerweise ohne Schweißzusatzstoffe.

Unter einer Stirnkehlnaht an einem Überlappstoß wird insbesondere eine Schweißverbindung zwischen wenigstens zwei Blechen verstanden, wobei ein oberes Blech zumindest teilweise überlappend auf einem unteren Blech aufliegt und die Schweißnaht zwischen wenigstens einer Kantenfläche bzw. Flankenfläche des oberen Blechs und der angrenzenden Auflagefläche des unteren Blechs ausgebildet ist. Eine solche Schweißnaht kann auch als Flankenkehlnaht bezeichnet werden. Die Stirnkehlnaht kann als durchgängige Schweißnaht oder in der Art einer Steppnaht (d. h. mit Nahtunterbrechungen) ausgebildet sein.

Bei den miteinander zu fügenden Blechen kann es sich um ebene Bleche (Platten) oder um räumlich geformte Bleche (Blechformteile) handeln. Bevorzugt ist vorgesehen, dass es sich um zinkbeschichtete Stahlbleche handelt. Ferner kann es sich auch um aluminiumbeschichtete Stahlbleche handeln. Unter einer Zinkbeschichtung oder Aluminiumbeschichtung wird insbesondere eine auf Zink oder Aluminium basierende Korrosionsschutzbeschichtung verstanden.

Das erfindungsgemäße Vorsehen einer Stirnkehlnaht führt zu sehr guten Entgasungsbedingungen für das Beschichtungsmaterial (insbesondere Zink), wodurch Prozessstörungen gegenüber dem eingangs erläuterten Stand der Technik erheblich reduziert werden. Zudem ist bei dem erfindungsgemäßen Verfahren nur ein Arbeitsschritt erforderlich; das in der DE 103 09 157 B4 beschriebene Erwärmen mittels des Laserstrahls (zur Verdampfung der Beschichtung) erübrigt sich.

Allerdings kann es beim Erzeugen der Stirnkehlnaht, bspw. in Folge von Bauteiltoleranzen, zu kritischen Abweichungen von einem vorgegebenen Soll-Schweißnahtverlauf kommen. Um solche Abweichungen zu vermeiden wird erfindungsgemäß ferner eine optische Überwachung des Schweißnahtverlaufs (Nahtlageerkennung durch Aufnahme und Auswertung von Bildern) und eine sich eventuell hieraus ergebende Korrekturbewegung für den Laserstrahl vorgeschlagen, wobei die Korrekturbewegung insbesondere durch die Scannereinrichtung bzw. die darin verbauten Scannerspiegel realisiert wird, damit der Laserstrahl dem vorgesehenen Soll-Schweißnahtverlauf präzise folgen kann. Dies kann auch als Online-Regelung des Schweißnahtverlaufs (bzw. als Online-Nahtfolgeregelung) bezeichnet werden. Das erfindungsgemäße Verfahren ermöglicht somit ein robustes Laser-Remote-Schweißen von wenigstens zwei beschichteten Blechen, das insbesondere auch für den Serieneinsatz im Fahrzeug-Karosseriebau geeignet ist.

Ein weiterer Vorteil des erfindungsgemäßen Verfahrens ist darin zu sehen, dass die beiden zu fügenden beschichteten Bleche mittels der wenigstens einen Kehlnaht spaltfrei bzw. abstandslos (d. h. mit so genanntem Nullspalt) verschweißt werden. Ein Spalt zwischen den verschweißten Blechen ist unerwünscht, weil Schmutz und/oder korrosive Medien (insbesondere Feuchtigkeit) eindringen können, was durch eine Kapillarwirkung begünstigt ist. Bei dem aus der DE 103 09 157 B4 vorbekannten Verfahren kondensiert der Beschichtungsdampf zwischen den Blechen, was zwangsläufig zu einer Beabstandung dieser Bleche führt. Bei dem in der JP 11047967 A beschriebenen Verfahren ist von vornherein eine Beabstandung der Bleche (mittels Schmelzkrater) vorgesehen, wobei das Einbringen der Schmelzkrater zur Spalteinstellung einen separaten und aufwändigen Arbeitsschritt darstellt.

Bei den mittels wenigstens einer Kameraeinrichtung erzeugten und nachfolgend mittels einer Kontrolleinrichtung ausgewerteten Bildern bzw. Videosequenzen handelt es sich insbesondere um Graubildaufnahmen. Bevorzugt ist vorgesehen, dass der von der Kameraeinrichtung erfasste Bereich von wenigstens einer künstlichen Lichtquelle zusätzlich beleuchtet wird, was bspw. im Hinblick auf Rauch und Dampf oder einen größeren Kameraabstand von Vorteil ist. Die künstliche Lichtquelle kann bspw. in der Scannereinrichtung eingebaut oder außen an der Scannereinrichtung befestigt sein. Ebenso kann auch die Kameraeinrichtung in der Scannereinrichtung eingebaut oder außen an der Scannereinrichtung befestigt sein.

Erfindungsgemäß werden die aufgenommenen Bilder hinsichtlich des Schweißnahtverlaufs in Bezug auf den wegen der Überlappung zwangsläufig vorhandenen Stufenversatz zwischen den Blechen ausgewertet. Die Lage der erzeugten Kehlnaht kann durch den Stufenversatz leicht auf den aufgenommenen Bildern identifiziert und zum Stufenversatz in Korrelation gebracht werden. Dies erlaubt dann eine Bestimmung der tatsächlichen Position des Laserstrahls und die Berechnung einer Korrekturbewegung, die dann durch entsprechende Umrechnung über die Scannereinrichtung bzw. die darin verbauten Scannerspiegel realisiert wird.

Optional kann vorgesehen sein, dass in einem ersten Verfahrensschritt im Bereich der aufzubringenden Stirnkehlnaht zunächst nur die Beschichtungen (von den Blechen) mit dem Laserstrahl abgedampft (d. h. durch Verdampfung abgetragen) werden und dass dann in einem zweiten Verfahrensschritt die bereichsweise entschichteten Bleche mit dem selben Laserstrahl verschweißt werden. Die in den einzelnen Verfahrensschritten erforderliche unterschiedliche Energieeinbringung kann bspw. durch die Verfahrgeschwindigkeit des Laserstrahls (und/oder gegebenenfalls auch durch Anzahl der Überfahrten) eingestellt werden. Ferner ist bevorzugt vorgesehen, dass im ersten Verfahrensschritt der Laserstrahl durch Defokussierung oder Oszillation faktisch verbreitert wird, so dass die Beschichtung in einem verhältnismäßig breiten Streifen abgedampft werden kann (ohne dass es im Übrigen zu einer Aufschmelzung des Blechgrundmaterials kommt).

Alternativ kann vorgesehen sein, dass im Bereich der aufzubringenden Stirnkehlnaht die Beschichtungen (von den Blechen) mit einem separaten (zweiten) Laserstrahl abgedampft werden, wobei dieser separate Laserstrahl dem (ersten) Laserstrahl für das Schweißen vorauseilt. Demnach sind hierbei zwei Laserstrahlen, jedoch nur ein Arbeitsschritt erforderlich. Zwei Laserstrahlen lassen sich bspw. durch zwei Scannereinrichtungen oder durch eine so genannte Doppelfokustechnologie bewerkstelligen. Die von der Kameraeinrichtung aufgenommenen Bilder bzw. Videosequenzen können auch im Hinblick auf eine Qualitätsüberprüfung der erzeugten Stirnkehlnaht automatisch ausgewertet werden, bspw. im Hinblick auf Auswürfe, Poren, Risse und dergleichen. Die automatisierte Auswertung kann von der Kontrolleinrichtung übernommen werden. Dadurch wird ohne nennenswerte Aufwands- und Kostenerhöhung eine Online-Qualitätsüberprüfung der erzeugten Stirnkehlnaht durch eine automatisierte Sichtprüfung ermöglicht. Aus dem Stand der Technik sind diverse Möglichkeiten zur Sichtprüfung der Nahtqualität bekannt.

Bevorzugt ist vorgesehen, dass vor dem Erzeugen der Stirnkehlnaht bzw. mehrerer Stirnkehlnähte zunächst der Soll-Schweißnahtverlauf ermittelt bzw. festgelegt wird, was unter anderem eine Verkürzung und Glättung des Nahtverlaufs, eine Optimierung der Geschwindigkeit, eine Zugänglichkeits- und Kollisionsprüfung, eine Taktzeitoptimierung und/oder eine Reihenfolgeplanung mehrerer Stirnkehlnähte umfassen kann. Bevorzugt erfolgt dies CAD-basiert. Dies kann auch als Offline-Bahnplanung bezeichnet werden.

Bei der erfindungsgemäßen Vorrichtung ist bevorzugt vorgesehen, dass die Scannereinrichtung an einer beweglichen Mechanik montiert ist. Eine bewegliche Mechanik ist z. B. ein Roboter, ein Portal oder dergleichen. Durch Bewegen der Scannereinrichtung mittels der beweglichen Mechanik an verschiedene Positionen kann der Arbeitsraum vergrößert werden. Finden die Verfahrbewegungen der Scannereinrichtung zeitgleich mit dem Schweißen statt, spricht man vom Schweißen "on the fly", wodurch Bearbeitungszeiten erheblich verkürzt werden können. Das "on the fly"-Schweißen erfordert eine Synchronisation der Bewegungen (d. h. Bewegung des Laserstrahls mittels der Scannereinrichtung und Bewegung der Scannereinrichtung mittels der Mechanik), was sowohl bei der Offline-Bahnplanung als auch bei der Online-Nahtfolgeregelung berücksichtigt werden kann. Die Kontrolleinrichtung ist hierfür dann entsprechend ausgelegt bzw. ausgebildet.

Die Erfindung wird nachfolgend anhand der Figuren beispielhaft und nicht einschränkender Weise näher erläutert. Die in den Figuren gezeigten und/oder nachfolgend erläuterten Merkmale können, unabhängig von konkreten Merkmalskombinationen, allgemeine Merkmale der Erfindung sein.
- Fig. 1: zeigt zwei durch eine Stirnkehlnaht miteinander verbundene Bleche in einer Draufsicht.
- Fig. 2: zeigt einen Schnitt durch die Stirnkehlnaht aus Fig. 1.
- Fig. 3: zeigt eine erfindungsgemäße Vorrichtung zum Laser-Remote-Schweißen in einer schematischen Ansicht.

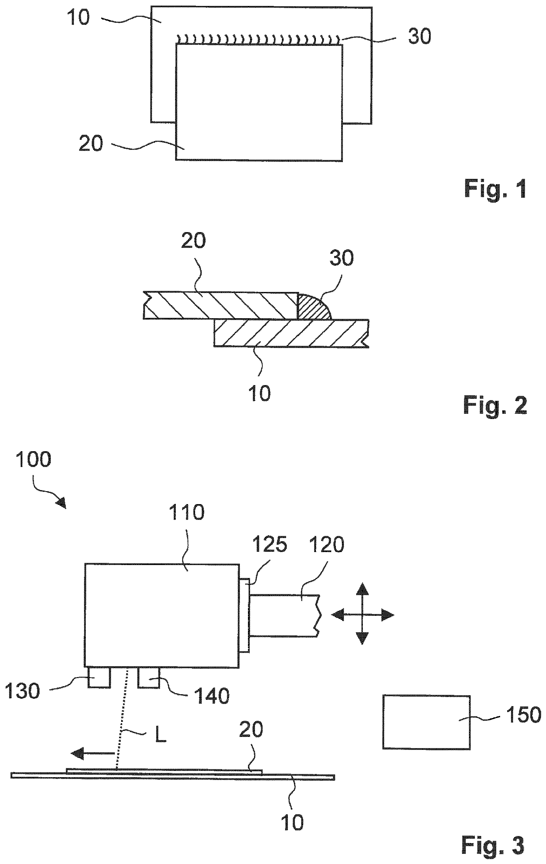

Fig. 1 zeigt zwei beschichtete ebene Bleche 10 und 20, die überlappend bzw. mit Überlappstoß zueinander angeordnet und durch eine gerade Stirnkehlnaht 30 stoffschlüssig miteinander verbunden sind. Gemäß der in Fig. 1 gezeigten Darstellung kann das Blech 10 als Unterblech und das Blech 20 als Oberblech bezeichnet werden. Das Oberblech 20 kann vollständig auf dem Unterblech 10 aufliegen und mit umlaufenden Stirn- bzw. Flankenkehlnähten mit dem Unterblech 10 verbunden sein. Eine Stirnkehlnaht 30 kann auch einen in der Ebene gekrümmten und gegebenenfalls auch räumlich gekrümmten Verlauf aufweisen.

Fig. 2 zeigt einen Schnitt durch die Kehlnaht 30. In dieser Darstellung ist sehr gut die Ausbildung der Schweißnaht zu erkennen, die zwischen der Kantenfläche bzw. Flankenfläche des Oberblechs 20 und der angrenzenden Auflagefläche des Unterblechs 10 ausgebildet ist.

Vor dem Verschweißen wird das Oberblech 20 auf dem Unterblech 10 positioniert und ausgerichtet. Anschließend werden die beschichteten Bleche 10 und 20 mit einem Laserstrahl geschweißt bzw. verschweißt, was auf der nachfolgend im Zusammenhang mit der Fig. 3 erläuterten Vorrichtung erfolgen kann.

Fig. 3 zeigt eine insgesamt mit 100 bezeichnete Vorrichtung zum Laser-Remote-Schweißen. Die Vorrichtung 100 umfasst eine an und für sich aus dem Stand der Technik bekannte Scannereinrichtung 110, die über einen Flansch 125 an einem Roboterarm 120 eines Roboters befestigt ist. Die Scannereinrichtung 110 kann mittels des Roboters im Raum bewegt werden, was mit den Doppelpfeilen veranschaulicht ist. Hierdurch ist ein Schweißen "on the fly" möglich, wie obenstehend erläutert. Ferner umfasst die Vorrichtung 100 eine an der Scannereinrichtung 110 befestigte Beleuchtungseinrichtung 130 und eine ebenfalls an der Scannereinrichtung 110 befestigte Kameraeinrichtung 140. Zur Vorrichtung 100 gehört ferner auch eine Kontrolleinrichtung 150, die über nicht dargestellte Schnittstellen mit der Scannereinrichtung 110, der Beleuchtungseinrichtung 130, der Kameraeinrichtung 140 und dem Roboter verbunden ist.

Um die beiden beschichteten Bleche 10 und 20 zu schweißen, werden diese zueinander positioniert. Anschließend wird mittels der Scannereinrichtung 110 ein Laserstrahl L auf die unterhalb der Scannereinrichtung 110 angeordneten Bleche 10 und 20 gelenkt und entlang einer vorgegebenen Bahn (Soll-Schweißnahtverlauf) über die Bleche 10 und 20 geführt (siehe Pfeil in Fig. 3), wobei eine Stirnkehlnaht 30 ausgebildet wird, wie oben beschrieben. Die Ausbildung einer Stirnkehlnaht 30 führt zu guten Entgasungsbedingungen für das Beschichtungsmaterial, das durch die vom Laserstrahl eingebrachte Wärme verdampft (wie oben ausführlich erläutert). Weitere Möglichkeiten zur Entschichtung der Bleche 20 und 30 sind oben beschrieben. Ferner erlaubt die Stirnkehlnaht ein spaltfreies Fügen der Bleche 10 und 20 (wie ebenfalls oben ausführlich erläutert).

Der Abstand zwischen de Scannereinrichtung 110 und den Blechen 10/20 beträgt bspw. 0,5 m oder mehr, was verstärkt zu Positionierfehlern führt. Während der Schweißnahterzeugung wird die erzeugte Stirnkehlnaht 30 fortlaufend durch die Kameraeinrichtung 140 erfasst, wobei der erfasste Bereich (dies ist typischerweise direkt die Prozesszone und die unmittelbare Prozessnachlaufzone) zusätzlich mit der Beleuchtungseinrichtung 130 beleuchtet werden kann. Anhand der von der Kameraeinrichtung 140 erfassten Bilder bzw. Videosequenzen wird der reale Schweißnahtverlauf von der Kontrolleinrichtung 150 automatisch ausgewertet, bspw. durch Vergleich mit dem Stufenversatz zwischen den Blechen 10 und 20. Bei einer Abweichung vom Soll-Schweißnahtverlauf wird die Bahn des Laserstrahls L korrigiert und an den Soll-Schweißnahtverlauf angepasst, was ebenfalls durch die Kontrolleinrichtung 150 veranlasst wird, die hierzu die Scannereinrichtung 110 und/oder den Roboter entsprechend ansteuert. Die Bahnanpassung kann mit einer Genauigkeit von +/- 100 µm erfolgen.

Anhand der von der Kameraeinrichtung 140 aufgenommenen Bilder kann auch eine Qualitätskontrolle bzw. Qualitätsprüfung der erzeugten Stirnkehlnaht 30 vorgenommen werden, wie bereits erläutert.

Anstelle der in Fig. 3 gezeigten beispielhaften Anordnung der Beleuchtungseinrichtung 130 und der Kameraeinrichtung 140 können diese auch in den Strahlengang innerhalb der Scannereinrichtung 110 eingekoppelt werden, was bspw. mit Hilfe von Spiegeln erfolgen kann.

### Bezugszeichenliste

### Verfahren und Vorrichtung zum Laser-Remote-Schweißen von zwei beschichteten Blechen

- 10: beschichtetes Blech (Unterblech)
- 20: beschichtetes Blech (Oberblech)
- 30: Stirnkehlnaht (Schweißnaht)
- 100: Vorrichtung
- 110: Scannereinrichtung
- 120: Roboterarm
- 125: Befestigungsflansch
- 130: Beleuchtungseinrichtung
- 140: Kameraeinrichtung
- 150: Kontrolleinrichtung (Steuermodul)
- L: Laserstrahl

## Patentansprüche

1. Verfahren zum Laser-Remote-Schweißen von zwei beschichteten Blechen (10, 20), wobei ein Laserstrahl (L) mittels einer Scannereinrichtung (110) auf die miteinander zu verbindenden Bleche (10, 20) gelenkt und auf diesen Blechen (10, 20) geführt wird und dabei die Bleche (10, 20) durch Erzeugen einer Stirnkehlnaht (30) an einem Überlappstoß miteinander verbunden werden, während die fortlaufende Schweißnahterzeugung durch eine Kameraeinrichtung (140) erfasst und anhand einer automatischen Auswertung der aufgenommenen Bilder die Bahn des Laserstrahls (L) gegebenenfalls korrigiert und an einen Soll-Schweißnahtverlauf angepasst wird,
**dadurch gekennzeichnet, dass**
die von der Kameraeinrichtung (140) aufgenommenen Bilder hinsichtlich des Schweißnahtverlaufs in Bezug auf den Stufenversatz zwischen den Blechen (10, 20) ausgewertet werden, indem die Lage der erzeugten Stirnkehlnaht (30) auf den aufgenommenen Bildern identifiziert und zum Stufenversatz in Korrelation gebracht wird, um die tatsächliche Position des Laserstrahls (L) zu bestimmen und eine Korrekturbewegung zu berechnen, die dann durch entsprechende Umrechnung über die Scannereinrichtung (110) realisiert wird.

2. Verfahren nach Anspruch 1,
**dadurch gekennzeichnet, dass**
in einem ersten Verfahrensschritt im Bereich der aufzubringenden Stirnkehlnaht (30) zunächst die Beschichtungen mit dem Laserstrahl (L) abgedampft werden und dass dann in einem zweiten Verfahrensschritt die entschichteten Bleche (10, 20) mit dem selben Laserstrahl (L) verschweißt werden.

3. Verfahren nach Anspruch 1,
**dadurch gekennzeichnet, dass**
im Bereich der aufzubringenden Stirnkehlnaht (30) die Beschichtungen mit einem separaten Laserstrahl abgedampft werden, wobei dieser separate Laserstrahl dem Laserstrahl (L) für das Schweißen vorauseilt.

4. Verfahren nach einem der vorausgehenden Ansprüche,
**dadurch gekennzeichnet, dass**
die von der Kameraeinrichtung (140) aufgenommenen Bilder im Hinblick auf eine Qualitätsüberprüfung der erzeugten Stirnkehlnaht (130) automatisch ausgewertet werden.

5. Verfahren nach einem der vorausgehenden Ansprüche,
**dadurch gekennzeichnet, dass**
der von der Kameraeinrichtung (140) erfasste Bereich von einer künstlichen Lichtquelle (130) zusätzlich beleuchtet wird.

6. Verfahren nach einem der vorausgehenden Ansprüche,
**dadurch gekennzeichnet, dass**
vor dem Erzeugen der Stirnkehlnaht (30) zunächst der Soll-Schweißnahtverlauf ermittelt wird, was unter anderem eine Verkürzung und Glättung des Nahtverlaufs, eine Optimierung der Geschwindigkeit, eine Zugänglichkeits- und Kollisionsprüfung, eine Taktzeitoptimierung und/oder eine Reihenfolgeplanung mehrerer Stirnkehlnähte umfasst.

7. Verfahren nach einem der vorausgehenden Ansprüche,
**dadurch gekennzeichnet, dass**
es sich bei den beschichteten Blechen (10, 20) jeweils um zinkbeschichtete Stahlbleche handelt.

8. Vorrichtung (100) zum Laser-Remote-Schweißen von zwei beschichteten Blechen (10, 20) mit einem Verfahren gemäß einem der vorausgehenden Ansprüche, umfassend:
- eine Scannereinrichtung (110), mit der ein Laserstrahl (L) auf die miteinander zu verbindenden Bleche (10, 20) gelenkt und darauf geführt werden kann, um die Bleche (10, 20) durch Erzeugen einer Stirnkehlnaht (30) an einem Überlappstoß miteinander zu verbinden;
- eine Kameraeinrichtung (140), mit der die fortlaufende Schweißnahterzeugung mittels des Laserstrahls (L) erfasst werden kann; und **gekennzeichnet durch**:
- eine Kontrolleinrichtung (150), mit der die von der Kameraeinrichtung (140) aufgenommenen Bilder automatisch ausgewertet und basierend hierauf die Bahn des Laserstrahls (L) gegebenenfalls korrigiert und an einen Soll-Schweißnahtverlauf angepasst wird, wobei die Kontrolleinrichtung (150) geeignet ist, die von der Kameraeinrichtung (140) aufgenommenen Bilder hinsichtlich des Schweißnahtverlaufs in Bezug auf den Stufenversatz zwischen den Blechen (10, 20) auszuwerten, indem die Lage der erzeugten Stirnkehlnaht (30) auf den aufgenommenen Bildern identifiziert und zum Stufenversatz in Korrelation gebracht wird, um die tatsächliche Position des Laserstrahls (L) zu bestimmen und eine Korrekturbewegung zu berechnen und dann die Scannereinrichtung (110) entsprechend anzusteuern.

9. Vorrichtung (100) nach Anspruch 8,
**dadurch gekennzeichnet, dass**
die Scannereinrichtung (110) an einer beweglichen Mechanik (120) montiert ist.

## Claims

1. A method for remote laser welding two coated metal sheets (10, 20), wherein a laser beam (L) by means of a scanner means (110) is directed onto the metal sheets (10, 20) which are to be joined together and is guided on these metal sheets (10, 20), and in so doing the metal sheets (10, 20) are joined together by producing an edge fillet weld (30) at a lap joint, while the continuous welding seam production is captured by a camera device (140), and by means of automatic evaluation of the images recorded the path of the laser beam (L) if necessary is corrected and adapted to a desired weld seam course,
**characterised in that**
the images recorded by the camera device (140) are evaluated with regard to the weld seam course in relation to the step offset between the metal sheets (10, 20) **in that** the position of the edge fillet weld (30) produced is identified on the recorded images and brought into correlation with the step offset in order to determine the actual position of the laser beam (L) and to calculate a correction movement which is then realised by corresponding conversion by way of the scanner means (110).

2. A method according to Claim 1,
**characterised in that**
in a first method step in the region of the edge fillet weld (30) which is to be applied first of all the coatings are vaporised with the laser beam (L), and **in that** then in a second method step the metal sheets (10, 20) which have had their coatings removed are welded with the same laser beam (L).

3. A method according to Claim 1,
**characterised in that**
in the region of the edge fillet weld (30) which is to be applied the coatings are vaporised with a separate laser beam, this separate laser beam being ahead of the laser beam (L) for the welding.

4. A method according to one of the preceding claims,
**characterised in that**
the images recorded by the camera device (140) are evaluated automatically with regard to a quality check of the edge fillet weld (130) produced.

5. A method according to one of the preceding claims,
**characterised in that**
the region captured by the camera device (140) is additionally illuminated by an artificial light source (130).

6. A method according to one of the preceding claims,
**characterised in that**
prior to the production of the edge fillet weld (30) first of all the desired weld seam course is determined, which comprises inter alia shortening and smoothing of the seam course, optimisation of the speed, an accessibility and collision check, a cycle time optimisation and/or a sequence planning of a plurality of edge fillet welds.

7. A method according to one of the preceding claims,
**characterised in that**
the coated metal sheets (10, 20) in each case are zinc-coated steel sheets.

8. A device (100) for remote laser welding two coated metal sheets (10, 20) using a method according to one of the preceding claims, comprising:
- a scanner means (110), with which a laser beam (L) can be directed onto the metal sheets (10, 20) which are to be joined together and can be guided thereon, in order to join the metal sheets (10, 20) together by producing an edge fillet weld (30) at a lap joint;
- a camera device (140) with which the continuous weld seam production by means of the laser beam (L) can be captured; and **characterised by**:
- a monitoring means (150), with which the images recorded by the camera device (140) are automatically evaluated and, based thereon, the path of the laser beam (L) if necessary is corrected and adapted to a desired weld seam course, wherein the monitoring means (150) is suitable for evaluating the images recorded by the camera device (140) with regard to the weld seam course in relation to the step offset between the metal sheets (10, 20) in that the position of the edge fillet weld (30) produced is identified on the recorded images and brought into correlation with the step offset in order to determine the actual position of the laser beam (L) and to calculate a correction movement and then to control the scanner means (110) accordingly.

9. A device (100) according to Claim 8,
**characterised in that**
the scanner means (110) is mounted on a movable mechanism (120).

## Revendications

1. Procédé de soudage par laser à distance, de deux tôles (10, 20), le faisceau laser (L) étant dirigé par une installation de balayage (110) sur les tôles à réunir (10, 20) et guidé sur ces tôles (10, 20) pour réunir les tôles (10, 20) par un cordon de soudure d'angle (30) de l'assemblage à recouvrir, la réalisation continue du cordon de soudure étant saisie par une installation caméra (140) et à l'aide des images saisies on corrige le cas échéant la trajectoire de faisceau laser (L) et on l'adapte à un tracé de consigne du cordon soudure,
**caractérisé en ce que**
on exploite les images de la caméra (140) pour le tracer du cordon de soudure en fonction du décalage entre les tôles (10, 20) en identifiant la position du cordon de soudure d'angle (30) sur les images prises et en le mettant en corrélation avec le décalage pour déterminer la position effective du faisceau laser (L) et calculer un mouvement de correction qui est appliqué par une conversion faite par l'installation de balayage (110).

2. Procédé selon la revendication 1,
**caractérisé en ce que**
dans une première étape du procédé, dans la région du cordon de soudure d'angle (30) à réaliser, on vaporise tout d'abord les revêtements à l'aide du faisceau laser (L) et dans une seconde étape avec le même faisceau laser (L) du procédé, on soude les tôles (10, 20) ainsi dégagées.

3. Procédé selon la revendication 1,
**caractérisé en ce que**
dans la région du cordon de soudure d'angle (30) à réaliser, on vaporise les revêtements à l'aide d'un faisceau laser distinct et ce faisceau laser distinct passe avant le faisceau laser (L) faisant la soudure.

4. Procédé selon l'une des revendications précédentes,
**caractérisé en ce que**
on exploite automatiquement les images prises par l'installation de caméra (140) pour contrôler la qualité du cordon de soudure d'angle (130) réalisé.

5. Procédé selon l'une des revendications précédentes,
**caractérisé en ce que**
on éclaire en plus la région saisie par l'installation de caméra (140) à l'aide d'une source de lumière (130) artificielle.

6. Procédé selon l'une des revendications précédentes,
**caractérisé en ce que**
avant de réaliser le cordon de soudure d'angle (30), on détermine tout d'abord le tracé de consigne du cordon de soudure ce qui comprend en autre le raccourcissement et le lissage du tracé du cordon, l'optimisation de la vitesse, le contrôle d'accessibilité et de collision, l'optimisation du temps de cadence et/ou la planification d'une série de plusieurs cordons de soudure d'angle.

7. Procédé selon l'une des revendications précédentes,
**caractérisé en ce que**
les tôles revêtues (10, 20) sont des tôles d'acier revêtues de zinc.

8. Dispositif (100) pour le soudage à distance de deux tôles revêtues (10, 20) avec un procédé selon l'une des revendications précédentes comprenant :
- une installation de balayage (110) qui dirige un faisceau laser (L) sur les tôles (10, 20) à réunir et guide le faisceau sur celles-ci pour relier les tôles (10, 20) en réalisant un cordon de soudure d'angle (30) sur l'assemblage à recouvrement,
- une installation de caméra (140) qui saisit la réalisation continue du cordon de soudure à l'aide du faisceau laser (L),
**caractérisé en ce que**
- l'installation de contrôle (150) exploite automatiquement les images prises par l'installation de caméra (140) et en fonction de cela, elle corrige le cas échéant, la trajectoire du faisceau laser (L) et l'adapte à un tracé de consigne de cordon soudure,
- l'installation de contrôle (150) permet d'exploiter les images prises par l'installation caméra (140) pour le tracé du cordon de soudure par rapport au décalage des tôles (10, 20) **en ce que** l'on identifie la position du cordon soudure d'angle (30) réalisé, sur les images prises et on la met en corrélation avec la décalage d'assemblage pour déterminer la position effective du faisceau laser (L) et calculer un mouvement de correction et ensuite commander de façon correspondante l'installation de balayage (110).

9. Dispositif (100) selon la revendication 8,
**caractérisé en ce que**
l'installation de balayage (110) est portée par un mécanisme mobile (120).
